# FASCICULE DE BREVET EUROPEEN

(11) **EP 1 532 315 B1**
(45) Date de publication et mention de la délivrance du brevet: **30.11.2016**
(21) Numéro de dépôt: 03757094.2
(22) Date de dépôt: 23.05.2003
(51) Int. Cl.: E01B 7/12, E01B 11/50

(54) **SOUDAGE SANS APPORT DE MATIERE D'UN ELEMENT D'APPAREIL DE VOIE ET UN TONCON DE RAIL**
VERSCHWEISSEN EINES ELEMENTS EINER GLEISEINHEIT UND EINES SCHIENENABSCHNITTS OHNE HINZUFÜGEN IRGENDEINES MATERIALS
WELDING OF AN ELEMENT OF A TRACK UNIT AND A RAIL SECTION WITHOUT ADDING ANY MATERIAL

(30) Priorité: 05.06.2002 FR 0206922
(43) Date de publication de la demande: 25.05.2005
(73) Titulaire: Vossloh Cogifer, 92500 Rueil Malmaison (FR)
(72) Inventeur: BAUMERT, Serge, 51380 Vaudemange (FR); MUGG, Philippe, 67500 Haguenau (FR)
(74) Mandataire: Lavoix
(86) Numéro de dépôt international: PCT/FR2003/001575
(87) Numéro de publication internationale: WO 2003/104563

(56) Documents cités:
- EP-A- 0 567 052
- EP-A1- 0 602 729
- FR-A- 2 346 495
- FR-A- 2 733 706
- US-A- 3 089 021
- US-A- 5 879 474
- US-B1- 6 177 205

## Description

La présente invention concerne une file de rail, du type comportant un élément d'appareil de voie ferroviaire en acier fortement allié, dans lequel au moins un élément allié a une teneur égale à au moins 5 % en masse, et un tronçon de rail en acier, liés l'un à l'autre par une soudure sans apport de métal.

L'invention concerne en particulier la liaison entre un appareil de voie tel qu'un coeur de croisement et un tronçon de rail constitué par exemple d'un rail de voie courant en acier au carbone.

Il est connu que, lorsqu'on soude une pièce en un acier au carbone avec une pièce en un acier fortement allié, la fusion produite lors de cette opération provoque, à l'interface de liaison entre les deux pièces, la formation d'alliages dont la composition chimique est différente de celle des matériaux de base. Lorsque la soudure est faite sans apport de métal, par exemple par soudage par étincelage, il est difficile de maîtriser la nature des alliages créés. Aussi, la soudure réalisée est généralement de qualité médiocre, celle-ci s'apparentant plutôt à un collage.

Les rails au carbone couramment utilisés pour constituer des rails de voies courantes comportent une quantité de carbone comprise, en masse, entre 0,55 % et 0,8 %. Pour assurer une dureté suffisante, les rails comportent des ajouts d'autres métaux tels que du chrome. Toutefois, la quantité de chrome élevée rend impossible la soudure entre les deux aciers trop fortement alliés.

Pour résoudre le problème mentionné ci-dessus, il est connu de prévoir un insert formant une pièce intermédiaire entre l'élément d'appareil de voie ferroviaire en acier fortement allié et le tronçon de rail. Cette pièce intermédiaire est formée dans un matériau susceptible d'être soudé facilement sur l'élément d'appareil de voie ferroviaire d'une part et sur le tronçon de rail d'autre part.

Le recours à une telle pièce intermédiaire augmente le coût de mise en oeuvre du procédé de liaison, notamment du fait des spécificités particulières du matériau constituant l'insert et de la nécessité de réaliser deux soudures. De plus, il est constaté des chutes de dureté dans le tronçon de rail, dans la zone affectée thermiquement (ZAT) par l'énergie de la soudure.

Le document EP 0 602 729 A1 divulgue une file de rail selon le préambule de la revendication 1.

L'invention a pour but de proposer une solution permettant d'assurer un niveau de dureté satisfaisant de l'élément d'appareil de voie et du tronçon de rail, ainsi que de la liaison entre l'élément d'appareil de voie et le tronçon de rail, sans que leur liaison ne soit d'un coût de réalisation élevé.

A cet effet, l'invention a pour objet une file de rail du type précité, caractérisée en ce que le tronçon de rail est formé d'un acier bainitique bas carbone moyennement allié qui a, en masse, la composition suivante:
- 0,05% à 0,50% de carbone ;
- 0,5% à 2,5% de manganèse ;
- 0,6% à 3% de silicium ou d'aluminium ;
- 0,25% à 3,1% de chrome ; et
- 0% à 0,9% de molybdène.

Suivant des modes particuliers de réalisation, la file de rail comporte l'une ou plusieurs des caractéristiques suivantes :
- l'acier bas carbone moyennement allié formant le tronçon de rail a une composition définie ci-dessous:
   - 0,28 % à 0,36 % de carbone ;
   - 1,40 % à 1,70 % de manganèse ;
   - au plus 0,03 % de phosphore ;
   - 0,01 % à 0,03 % de soufre ;
   - au plus 0,005 % d'aluminium ;
   - 1 % à 1,40 % de silicium
   - 0,40 % à 0,60 % de chrome ;
   - 0,08 % à 0,20 % de molybdène ;
   - au plus 0,04 % de titane ; et
   - au plus 0,004 % de bore ; et
- l'élément d'appareil de voie ferroviaire en acier fortement allié comprend, en masse, 12 % à 14 % de manganèse.

L'invention sera mieux comprise à la lecture de la description qui va suivre, donnée uniquement à titre d'exemple et faite en se référant aux dessins, sur lesquels :
- la figure 1 est une vue en élévation schématique d'un coeur de croisement de voies ferroviaires auxquelles sont soudés quatre tronçons de rail de voies courantes ;
- la figure 2 est une photomicrographie d'une soudure d'une file de rail selon l'invention ; et
- les figures 3 et 4 sont des diagrammes montrant la dureté mesurée suivant la longueur de la file de rail dans la région de la soudure pour deux modes différents de mise en oeuvre de l'invention.

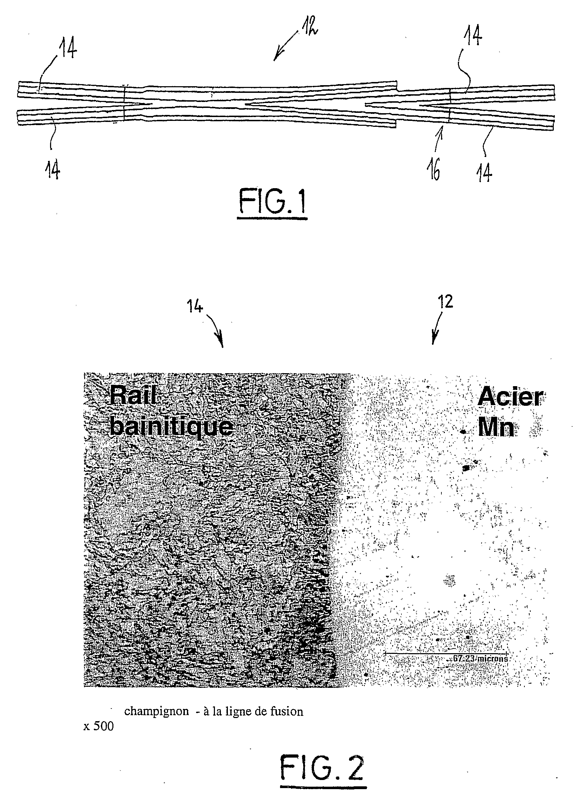

Sur la figure 1 est représenté un coeur de croisement permettant le croisement de deux files de voies sécantes. Le coeur de croisement 12 est ainsi relié à ses quatre extrémités à quatre tronçons de voies courantes 14.

Les tronçons de voies 14 sont reliés au coeur de croisement par des soudures 16 sans apport de métal.

Comme connu en soi, le coeur de croisement 12 est formé dans un acier fortement allié, dans lequel au moins un élément allié a une teneur égale à au moins 5 % en masse.

Cet acier est notamment un acier allié contenant entre 12 % et 14 % en masse de manganèse, le coeur de croisement ayant été obtenu par moulage. Il s'agit d'un acier bien connu sous le nom de HADFIELD.

La dureté de cet acier est comprise entre 170 et 230 HB.

Selon l'invention, les tronçons de rail 14 sont réalisés dans un acier bas carbone moyennement allié selon la revendication 1, et chaque soudure 16 est une soudure sans apport de métal réalisée directement entre l'acier fortement allié et l'acier bas carbone moyennement allié.

De préférence, l'acier bas carbone moyennement allié est un acier bainitique sans carbure.

De manière plus préférée, l'acier bainitique a une composition définie ci-dessous :
- 0,28 % à 0,36 % de carbone ;
- 1,40 % à 1,70 % de manganèse ;
- au plus 0,03 % de phosphore ;
- 0,01 % à 0,03 % de soufre ;
- au plus 0,005 % d'aluminium ;
- 1 % à 1,40 % de silicium
- 0,40 % à 0,60 % de chrome ;
- 0,08 % à 0,20 % de molybdène ;
- au plus 0,04 % de titane ; et
- au plus 0,004 % de bore.

Cet acier a une dureté comprise entre 350 et 390 HB.

La soudure 16 est obtenue par exemple par étincelage et forgeage suivant un cycle de soudage classique connu en soi.

En variante, la soudure peut être obtenue par induction, par friction, par faisceau d'électrons, par laser ou par tout autre faisceau à haute énergie.

Sur la figure 2 est illustré l'aspect de la soudure 16 obtenue. Il apparaît sur cette microphotographie agrandie cinq cents fois que l'interface est très nette entre l'acier bainitique bas carbone et l'acier fortement allié, les deux aciers étant interpénétrés de manière satisfaisante.

Suivant un premier mode de réalisation envisagé, l'élément d'appareil de voie en acier fortement allié est à température ambiante avant le soudage par étincelage et d'une dureté résultant d'une hypertrempe de 170 à 230 HB.

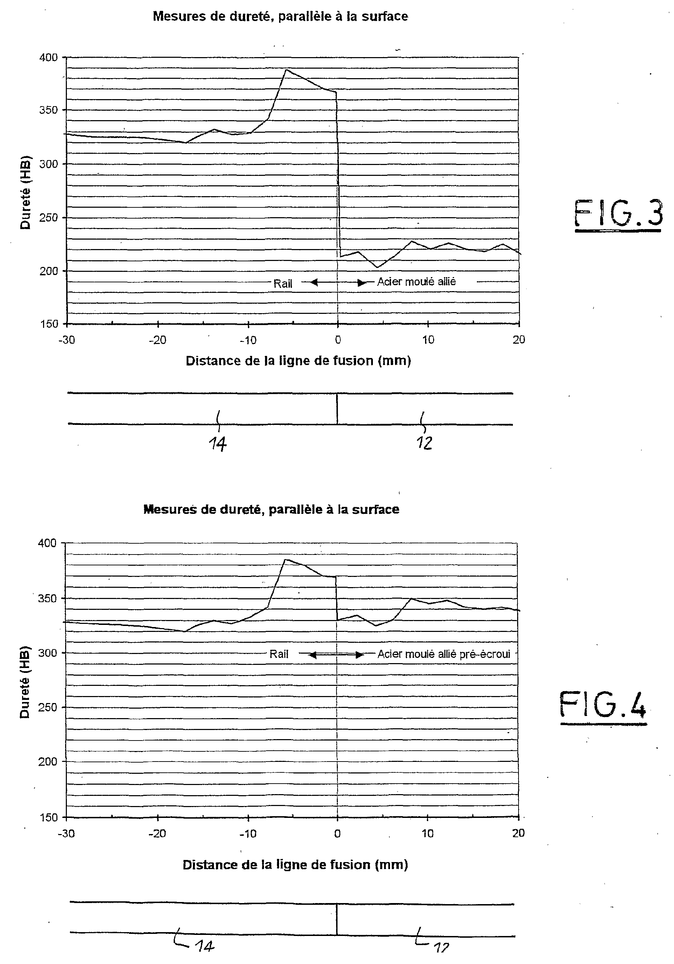

Dans ce cas, l'évolution de la dureté de la file de rail au voisinage de la soudure est représentée sur la figure 3.

On constate que, dans sa partie courante, le tronçon de rail 14 a une dureté comprise entre 290 et 330 HB, et que cette dureté croît pour atteindre une valeur proche de 380 HB au voisinage immédiat de la soudure. La dureté de la file de rail reste à une valeur comprise entre 185 et 235 HB dans l'élément d'appareil de voie en acier fortement allié 12. Cette dureté correspond à la dureté de l'élément d'appareil de voie avant soudage.

On constate donc qu'avec les compositions selon l'invention, la dureté reste satisfaisante au voisinage immédiat de la soudure, celle-ci n'étant pas inférieure à la dureté propre aux deux éléments soudés l'un à l'autre et qu'en particulier, il n'y a aucune chute de la dureté dans la zone affectée thermiquement (ZAT).

Suivant une variante de réalisation, l'extrémité de l'élément d'appareil de voie en acier fortement allié destinée à être soudée est pré-durcie avant mise en oeuvre de la soudure par étincelage afin d'augmenter sa dureté. Ce pré-durcissage est obtenu par exemple par explosion.

La dureté de l'élément d'appareil de voie avant soudage est alors portée à une valeur comprise entre 330 et 360 HB.

Avec cette étape supplémentaire, les mesures de dureté obtenues sont celles illustrées sur la figure 4. Dans ce cas, la dureté du tronçon de rail est sensiblement identique à celle de la figure 3. En revanche, la dureté de l'élément d'appareil de voie en acier fortement allié au voisinage immédiat de la soudure est sensiblement égale à 350 HB, valeur sensiblement égale à celle du tronçon de rail, dans sa partie courante.

## Revendications

1. File de rail comportant un élément (12) d'appareil de voie ferroviaire en acier fortement allié, dans lequel au moins un élément allié a une teneur égale à au moins 5 % en masse, et un tronçon de rail (14) en acier moyennement allié, liés directement l'un à l'autre par une soudure sans apport de métal, le tronçon de rail (14) étant formé d'un acier bainitique bas carbone moyennement allié, **caractérisé en ce que** ledit acier bainitique a, en masse, la composition suivante :
- 0,05 % à 0,50 % de carbone ;
- 0,5 % à 2,5 % de manganèse ;
- 0,6 % à 3 % de silicium ou d'aluminium ;
- 0,25 % à 3,1 % de chrome ; et
- 0 % à 0,9 % de molybdène.

2. File de rail selon la revendication 1, **caractérisée en ce que** l'acier bas carbone moyennement allié est un acier bainitique sans carbure.

3. File de rail selon l'une des revendications 1 ou 2, **caractérisée en ce que** l'acier bainitique bas carbone moyennement allié formant le tronçon de rail a une composition définie ci-dessous:
- 0,28 % à 0,36 % de carbone ;
- 1,40 % à 1,70 % de manganèse ;
- au plus 0,03 % de phosphore ;
- 0,01 % à 0,03 % de soufre ;
- au plus 0,005 % d'aluminium ;
- 1 % à 1,40 % de silicium
- 0,40 % à 0,60 % de chrome ;
- 0,08 % à 0,20 % de molybdène ;
- au plus 0,04 % de titane ; et
- au plus 0,004 % de bore.

4. File de rail selon l'une quelconque des revendications précédentes, **caractérisée en ce que** l'élément d'appareil de voie ferroviaire en acier fortement allié comprend, en masse, 12 % à 14 % de manganèse.

## Patentansprüche

1. Schienenstrang mit einem Eisenbahnweichenelement (12) aus hochlegiertem Stahl, wobei mindestens ein legiertes Element einen Gehalt gleich mindestens 5 Masse-% hat, und einem Schienenabschnitt (14) aus mittellegiertem Stahl, die durch eine Schweißung ohne Zusatz von Metall direkt miteinander verbunden sind,
wobei der Schienenabschnitt (14) aus einem niedrig kohlenstoffhaltigen mittellegiertem Bainitstahl gebildet ist, **dadurch gekennzeichnet, dass** der Bainitstahl, bezogen auf die Masse, die folgende Zusammensetzung hat:
- 0,05 % bis 0,50 % Kohlenstoff;
- 0,5 % bis 2,5 % Mangan;
- 0,6 % bis 3 % Silizium oder Aluminium;
- 0,25 % bis 3,1 % Chrom; und
- 0 % bis 0,9 % Molybdän.

2. Schienenstrang nach Anspruch 1, **dadurch gekennzeichnet, dass** der niedrig kohlenstoffhaltige mittellegiertem Stahl ein carbidfreier Bainitstahl ist.

3. Schienenstrang nach einem der Ansprüche 1 oder 2, **dadurch gekennzeichnet, dass** der niedrig kohlenstoffhaltige mittellegiertem Bainitstahl, der den Schienenabschnitt bildet, eine unten definierte Zusammensetzung hat:
- 0,28 % bis 0,36 % Kohlenstoff;
- 1,40 % bis 1,70 % Mangan;
- höchstens 0,03 % Phosphor;
- 0,01 % bis 0,03 % Schwefel;
- höchstens 0,005 % Aluminium;
- 1 % bis 1,40 % Silizium;
- 0,40 % bis 0,60 % Chrom;
- 0,08 % bis 0,20 % Molybdän;
- höchstens 0,04 % Titan; und
- höchstens 0,004 % Bor.

4. Schienenstrang nach einem der vorhergehenden Ansprüche, **dadurch gekennzeichnet, dass** das Eisenbahnweichenelement aus hochlegiertem Stahl, bezogen auf die Masse, 12 % bis 14 % Mangan enthält.

## Claims

1. Rail track comprising a railway switch and crossing element (12) made from high-alloy steel, in which the content of at least one alloy element is at least 5 wt.%, and a length of rail (14) made from medium-alloy steel, that are directly interconnected by a weld without metal deposition, the length of rail (14) being formed from a medium-alloy low-carbon bainitic steel, **characterised in that** said bainitic steel has the following composition by weight:
- 0.05 % to 0.50 % carbon;
- 0.5 % to 2.5 % manganese;
- 0.6 % to 3 % silicon or aluminium;
- 0.25 % to 3.1% chromium; and
- 0 % to 0.9 % molybdenum.

2. Rail track according to claim 1, **characterised in that** the medium-alloy low-carbon steel is a carbide-free bainitic steel.

3. Rail track according to either claim 1 or claim 2, **characterised in that** the medium-alloy low-carbon bainitic steel forming the length of rail has a composition defined below:
- 0.28 % to 0.36 % carbon;
- 1.40 % to 1.70 % manganese;
- at most 0.03 % phosphorus;
- 0.01 % to 0.03 % sulfur;
- at most 0.005 % aluminium;
- 1 % to 1.40 % silicon;
- 0.40 % to 0.60 % chromium;
- 0.08 % to 0.20 % molybdenum;
- at most 0.04 % titanium; and
- at most 0.004 % boron.

4. Rail track according to any of the preceding claims, **characterised in that** the high-alloy steel railway switch and crossing element comprises from 12 wt.% to 14 wt.% manganese.
